# EUROPEAN PATENT APPLICATION

(11) **EP 2 386 918 A2**
(43) Date of publication of application: **16.11.2011**
(21) Application number: 11165817.5
(22) Date of filing: 12.05.2011
(51) Int. Cl.: G05B 9/02

(54) **Valve isolation system and method**

(30) Priority: 12.05.2010 US 334005 P
(71) Applicant: Rockwell Automation Technologies, Inc., Mayfield Heights, OH 44124 (US)
(72) Inventor: Scharnick, Michael, Brookfield, WI 53005-1034 (US)
(74) Representative: Grünecker, Kinkeldey, Stockmair & Schwanhäusser

(57) **Abstract**

One or more valves associated with a controlled machine process may be isolated from one or more remote isolation stations. For isolation, a manual switch is activated that are coupled to a safety relay. This relay is, in turn, coupled to a coil that removes power used to control the valve to be isolated. An operator-perceptible indication may be provided by monitoring a parameter representative of the valve state, such as pressure downstream of the valve. Such indication may be provided at each remote isolation station. The arrangement allows for lock-out of valves by remote operation.

## Description

### CROSS REFERENCE TO RELATED APPLICATIONS

*This application claims priority to* U.S. Provisional Patent Application No. 61/334,005*, entitled "Valve Isolation System and Method", filed May 12, 2010, which is herein incorporated by reference.*

### BACKGROUND

The present invention relates generally to a means to control valving elements and more particularly to a control system employing remote lockout stations for control and monitoring of the isolation of valves.

A range of isolation devices are known and are currently in use for industrial, commercial, transportation, and other industries. Traditional systems employed electromechanical switches, such as disconnects that could be locked in an open configuration by a traditional pad lock. The pad lock ensured that the system would not be re-energized while under service. More sophisticated systems have been developed that allow for electrical lock-out/tag-out of electrical and other devices, including the ability to lock out circuits from remote stations. One such system is commercially available from Rockwell Automation of Milwaukee, Wisconsin under the commercial designation ElectroGuard_{™}.

There is a continuing need for specialized lock-out or isolation systems, however, adapted for valving, such as pneumatic systems, hydraulic systems, process systems, high pressure water systems, gas systems, fuels, chemicals and process fluids, and so forth.

### BRIEF DESCRIPTION

The present invention provides a lock-out or isolation system specifically designed for valving. In particular, the system is designed for a use with powered valves, such as solenoid-operated valves or valve actuators. The system may be used with pneumatic systems or hydraulic systems, but is also suitable for a wide range of fluid valves, such as liquid and gaseous fluids, process fluids, water, fuels, and so forth. The invention makes use of remote lock-out stations that may be expandable to provide a variety of locations from which isolation may be commanded and controlled. The system is specifically designed only to work with valving, such that the ancillary components that may be associated, in other contexts, with electrical power, such as for motors and other loads, are not required.

### DRAWINGS

These and other features, aspects, and advantages of the present invention will become better understood when the following detailed description is read with reference to the accompanying drawings in which like characters represent like parts throughout the drawings, wherein:

FIG. 1 is a diagrammatical representation of an exemplary machine or process utilizing valves for conveying pressurized fluids, along with circuitry designed to permit valve isolation, such as for servicing;

FIG. 2 is a further diagrammatical representation of certain functional circuitry for use in the valve isolation system of FIG. 1; and

FIG. 3 is a more detailed diagrammatical representation of certain functional circuitry for use in the system.

### DETAILED DESCRIPTION

The figures illustrate certain functional circuitry for a valve isolation system in accordance with the present techniques. Certain aspects of the designs shown in the figures may be at least partially shown and explained in a series of U.S. patents, including USP 6,611,416, entitled "Safety Relay Circuit for Large Power Contactors"; USP 6,764,059, entitled "Valve Isolation Systems"; USP 6,937,450, entitled "Grounded Isolation System"; USP 7,212,391, entitled "Grounded Isolation System"; USP 7,420,297, entitled "Combination Control System with Intermediate Module"; USP 7,610,107, entitled "Control System Having Verification Module"; and USP 7,675,200, entitled "Combination Control System with Intermediate Module"; all of which are hereby incorporated into the present disclosure by reference in their entirety.

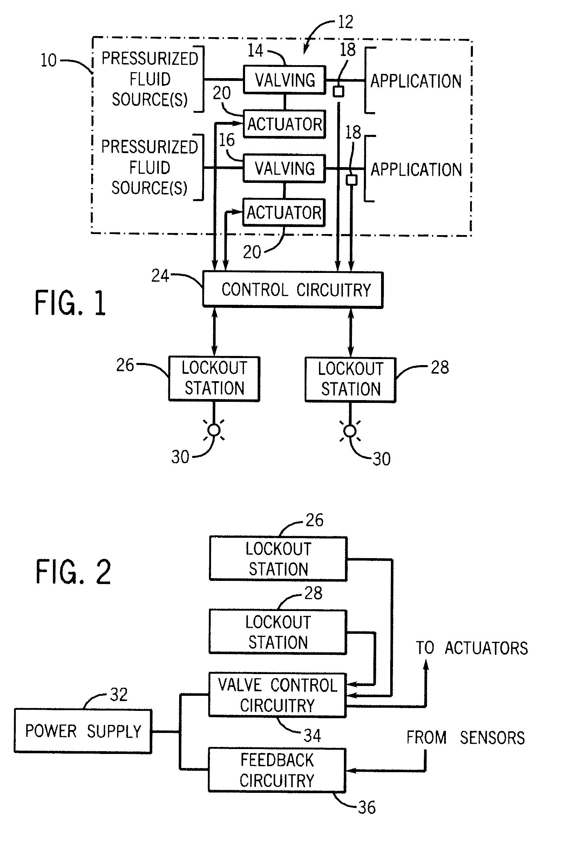

FIG. 1 illustrates an exemplary machine system 10 in which valves may be controlled, and when desired "locked-out", such as for servicing. The system may be of any type, and serve any desired process, including industrial manufacturing processes, material handling processes, chemical and gas production processes, vehicular processes (e.g., on marine equipment), and so forth. The present invention is not intended to be limited to any particular type or field of machine or process. The system includes process machinery, represented generally by the reference numeral 12. Here again, this machinery may include pneumatic systems, hydraulic systems, both liquid and gaseous fluid systems, process fluid systems, water systems, fuel systems, and so forth, or any combination of these. In general, the machinery will make use of one or more valves, designated generally by the reference numerals 14 and 16. The valves will be designed to convey one or more fluids under pressure from one part of the process to another. One or more sensors 18 will be associated with each valve, and will typically detect pressure downstream of the respective valve. It should be appreciated, however, that such instrumentation may sense upstream pressure, valve position, flow rate, or any other useful parameters of the valving or fluid system of which they are part. Finally, each valve will be controlled by one or more actuators, as indicated by reference numerals 20 and 22, for valves 14 and 16, respectively. As will be appreciated by those skilled in the art, such actuators may include solenoids and electrical direct actuators, but may also include motorized valve positioners, pneumatically or hydraulically piloted actuators, and so forth.

FIG. 1 also diagrammatically illustrates control circuitry 24 for remotely controlling the state of the valves. This circuitry, which may be located near the part of the machinery where the valves or positioned or quite remote from such locations, may allow for ON-OFF (i.e., open-closed) operation of the valves, or may allow for metering or throttling control. Moreover, the control circuitry may be automatically controlled or manually controlled, typically depending upon the type of process, and in the former case, closed loop control may be based upon other process parameters in a manner generally known in the art. One or more remote lock-out stations 26 and 28 are also provided, and coupled to the control circuitry. As described in greater detail below, these stations allow an operator or service personnel to isolate or disable one or more of the valves, such as to ensure that no change in the state of the valve is made. Such lock-out procedures may be used, for example, during servicing of the valves or downstream equipment. As illustrated, one or more indicators 30 are also provided for indicating an operative state of the valves. In practice, lights, audible indicators, panel display features, or any other suitable devices may be used in this manner to indicate that the valves are operative, that the valves or isolated, the position of the valves, or multiple of these. In the present context, it will be useful that the indicators at least allow for indicating that one or move of the valves is isolated or "locked-out" when desired, as described below.

In the arrangement illustrated in FIG. 1, a control circuitry 24 is coupled to incoming power, such as 120V AC power. The control circuitry is also coupled to a 24V DC power supply 32 to supply power to the valve isolation circuitry illustrated in FIGS. 1 and 2. The circuitry of FIG. 1 and FIG. 2 shows remote lock-out stations designated generally by reference numerals 26 and 28, although any number of such stations may be provided for. ElectroGuard accessories such as the expansion modules available from Rockwell Automation of Milwaukee, Wisconsin can be used to increase the number of the remote lockout stations. In other settings, such as industrial and commercial settings, transportation settings (such as in maritime applications) the remote lock-out stations may be provided in any suitable and convenient locations.

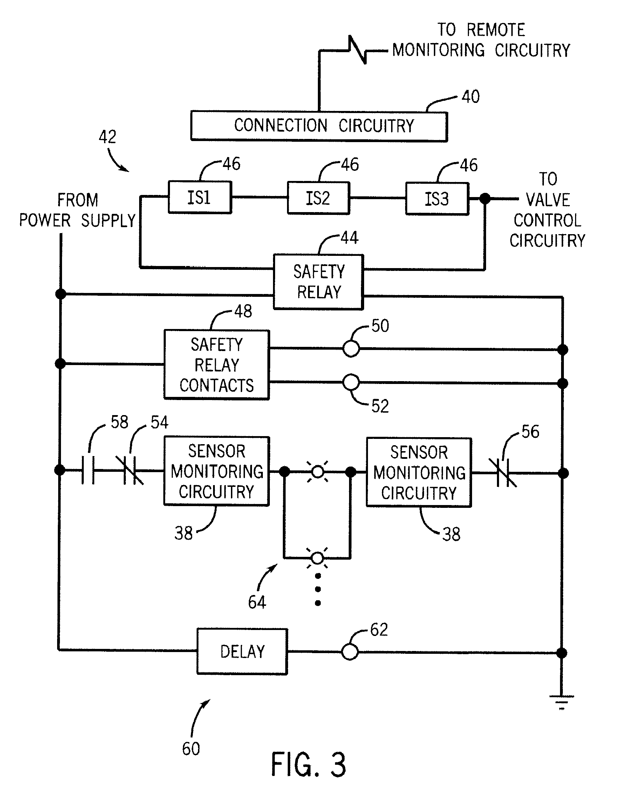

Also illustrated in the diagrams of FIGS. 1 and 2 is valve control circuitry 34, and any suitable number of such circuits may be provided, corresponding to controlled valves. Here again, it should be noted that the valves powered by and isolated by the circuitry illustrated may control the flow of air, hydraulic fluid, gasses, fuels, process fluids, high pressure water, or any other desired flowing fluid. FIG. 2 also illustrates a feedback circuit 36 for an indicator light (or other indicator) that demonstrates that isolation or one or more valves has been effected. As discussed below, each feedback circuit includes at least one sensor monitoring circuit 38 (see FIG. 3) that serves to determine, based upon the parameters monitored, whether a desired valve has been effectively isolated.

FIG. 3 illustrates further functional circuitry, including connection circuits 40 that may be made to provide signals for remote communication of the states of the isolation circuitry, such as to remote monitoring devices (e.g., automation controllers, factory floor monitors and controllers, enterprise monitors and controllers, and so forth). These communications may take any suitable form, such as conventional DeviceNet, Profibus, Ethernet, and so forth, such as may be connected through various input/output circuitry (not shown). The connection circuits may, for example, provide status signals to remote control and/or monitoring systems.

In the illustration of FIG. 3, the isolation stations may include redundant switching input circuitry, as indicated by reference numeral 42. Further, the figure represents a safety relay 44 coupled to the remote lock-out stations. As illustrated, an operator will depress or open (or more generally, activate) an isolation switch 46 as illustrated in FIG. 3. Opening any of the isolation switches will cause a signal to be sent from the safety relay 44 to the safety relay contacts 48 shown in FIG. 3. These contacts will be caused to open, de-energizing coils 50 and 52. The de-energization of coils 50 and 52, in turn, controls the state of contacts 54 and 56. That is, these contacts are opened to remove power from valving that would be coupled to them when installed. Moreover, contacts 58 are provided in series with the feedback circuitry and are responsive to a delay circuit 60 and associated coil 62. The delay circuit is provided to ensure that the safety relay is powered before powering any indicator lights, thereby avoiding powering the indicator lights in the event that the safety relay is not yet powered and stable.

When the pressure sensor (or other parameter sensors, e.g., position, flow, etc.) associated with the appropriate valve has determined that energy isolation as occurred, as indicated by monitoring circuits 38, contacts are closed in the feedback circuit to illuminate an indicator light 64 to indicate that isolation has taken place. Moreover, contacts 54 and 56 are utilized to set initial conditions in the powered and isolated valving (e.g., to energize or de-energize the valve initially). It should be noted that additional indicator lights are provided in each remote lock-out station 26 and 28, to provide a local user-perceptible indication that the isolation and lock-out has been effected.

In operation, the circuitry described above and illustrated in the figures may serve to check a pressure reading prior to isolation of any connected valving, and check a further pressure reading following isolation to ensure that the isolation has been effective at stopping the flow of pressurized fluid. In certain systems, such as hydraulic systems, the system may also verify that a hydraulic line has been coupled to a hydraulic reservoir allowing the draining of fluid to a reservoir. The system may be employed with single valves or with multiple redundant valving, such as in applications with two valves in series. The valves may be powered when fluid is to be provided for a particular fluid application and power may be interrupted to prevent the provision of such fluid.

While only certain features of the invention have been illustrated and described herein, many modifications and changes will occur to those skilled in the art. It is, therefore, to be understood that the appended claims are intended to cover all such modifications and changes as fall within the true spirit of the invention.

### The following is a list of further preferred embodiments of the invention:

Embodiment 1: A dedicated system for isolating a valve, comprising:
   electrical contacts in a power circuit configured to be coupled to a remotely controlled valve;
   a remote isolation circuit remote from the valve and comprising a manually operable switch;
   a relay coupled to the remote isolation circuit and configured to generate an isolation signal in response to operation of the switch; and
   a control coil coupled to the relay and configured to cause opening of the contacts to isolate the valve upon generation of the isolation signal.
Embodiment 2: The system of embodiment 1, comprising an indicator feedback circuit coupled to the control coil and configured to provide an operator-perceptible indication that the valve has been isolated.
Embodiment 3: The system of embodiment 2, comprising a delay circuit configured to delay providing of the operator-perceptible indication.
Embodiment 4: The system of embodiment 2, wherein the operator-perceptible indication comprises illumination of a light.
Embodiment 5: The system of embodiment 1, comprising an initialization circuit configured to initialize a state of the valve upon powering of the valve.
Embodiment 6: The system of embodiment 1, comprising a plurality of remote isolation circuits, all remote isolation circuits being capable of causing the relay to generate the isolation signal.
Embodiment 7: The system of embodiment 1, comprising a communication interface circuit configured to provide an indication of a status of the valve to a remote monitoring or control system.
Embodiment 8: The system of embodiment 1, comprising one or more sensors configured to detect a parameter representative of a state of the valve.
Embodiment 9: The system of embodiment 8, comprising an indicator feedback circuit coupled to the control coil and including at least one sensor monitoring circuit coupled to the at least one sensor, the indicator feedback circuit being configured to provide an operator-perceptible indication that the valve has been isolated based upon sensor feedback monitored by the at least one sensor monitoring circuit.
Embodiment 10: The system of embodiment 8, wherein the parameter comprises pressure downstream of the valve.
Embodiment 11: A method of isolating a valve, comprising:
   coupling valve control coil to a relay, the control coil being energizabfe to control electrical contacts for energizing a valve control circuit;
   coupling the relay to a remote isolation circuit comprising a manual switch, the manual switch being operative to cause the relay to generate an isolation signal that de-energizes the control coil to open the electrical contacts.
Embodiment 12: The method of embodiment 11, comprising coupling a plurality of remote isolation circuits to the relay, all of the remote isolation circuits being capable of causing the relay to generate the isolation signal.
Embodiment 13: The method of embodiment 11, comprising coupling a operator-perceptible indication circuit to the control coil, the operator-perceptible indication circuit being configured to provide an indication that the valve is isolated by opening of the electrical contacts.
Embodiment 14: The method of embodiment 13, comprising coupling a delay circuit to the indication circuit to delay provision of the indication.
Embodiment 15: The method of embodiment 13, comprising monitoring feedback from at least one sensor that monitors a parameter representative of a state of the valve.
Embodiment 16: The method of embodiment 15, wherein the operator-perceptible indication that the valve has been isolated is based upon sensor feedback monitored by a feedback monitoring circuit coupled to the indication circuit.
Embodiment 17: The system of embodiment 16, wherein the parameter comprises pressure downstream of the valve.
Embodiment 18: A dedicated system for isolating one or more valves, comprising:
   electrical contacts in a power circuit configured to be coupled to one or more valve control circuits;
   a plurality of remote isolation circuits remote from the one or more valves and each comprising a manually operable switch;
   a relay coupled to the remote isolation circuits and configured to generate an isolation signal in response to operation of the switches; and
   a control coil coupled to the relay and configured to cause opening of the contacts to isolate the one or more valves upon generation of the isolation signal.
Embodiment 19: The system of embodiment 18, wherein the system comprises electrical contacts configured to be coupled to a plurality of valves controlling flow of different fluids.
Embodiment 20: The system of embodiment 18, comprising an indicator feedback circuit coupled to the control coil and including at least one sensor monitoring circuit coupled to at least one sensor, the indicator feedback circuit being configured to provide an operator-perceptible indication that at least one of the one or more valves has been isolated based upon sensor feedback monitored by the at least one sensor monitoring circuit.

## Claims

1. A dedicated system for isolating a valve, comprising:
electrical contacts in a power circuit configured to be coupled to a remotely controlled valve;
a remote isolation circuit remote from the valve and comprising a manually operable switch;
a relay coupled to the remote isolation circuit and configured to generate an isolation signal in response to operation of the switch; and
a control coil coupled to the relay and configured to cause opening of the contacts to isolate the valve upon generation of the isolation signal.

2. The system of claim 1, comprising an indicator feedback circuit coupled to the control coil and configured to provide an operator-perceptible indication that the valve has been isolated.

3. The system of claim 2, comprising a delay circuit configured to delay providing of the operator-perceptible indication, or
wherein the operator-perceptible indication comprises illumination of a light.

4. The system of any one of claims 1 to 3, comprising an initialization circuit configured to initialize a state of the valve upon powering of the valve.

5. The system of any one of claims 1 to 4, comprising a plurality of remote isolation circuits, all remote isolation circuits being capable of causing the relay to generate the isolation signal.

6. The system of any one of claims 1 to 5, comprising a communication interface circuit configured to provide an indication of a status of the valve to a remote monitoring or control system.

7. The system of any one of claims 1 to 6, comprising one or more sensors configured to detect a parameter representative of a state of the valve.

8. The system of claim 7, comprising an indicator feedback circuit coupled to the control coil and including at least one sensor monitoring circuit coupled to the at least one sensor, the indicator feedback circuit being configured to provide an operator-perceptible indication that the valve has been isolated based upon sensor feedback monitored by the at least one sensor monitoring circuit.

9. The system of claim 7, wherein the parameter comprises pressure downstream of the valve.

10. A method of isolating a valve, comprising:
coupling valve control coil to a relay, the control coil being energizable to control electrical contacts for energizing a valve control circuit;
coupling the relay to a remote isolation circuit comprising a manual switch, the manual switch being operative to cause the relay to generate an isolation signal that de-energizes the control coil to open the electrical contacts.

11. The method of claim 10, comprising coupling a plurality of remote isolation circuits to the relay, all of the remote isolation circuits being capable of causing the relay to generate the isolation signal, or
comprising coupling a operator-perceptible indication circuit to the control coil, the operator-perceptible indication circuit being configured to provide an indication that the valve is isolated by opening of the electrical contacts.

12. The method of claim 10 or 11, comprising coupling a delay circuit to the indication circuit to delay provision of the indication, or
comprising monitoring feedback from at least one sensor that monitors a parameter representative of a state of the valve.

13. The method of any one of claims 10 to 12, wherein the operator-perceptible indication that the valve has been isolated is based upon sensor feedback monitored by a feedback monitoring circuit coupled to the indication circuit, and/or
wherein the parameter comprises pressure downstream of the valve.

14. A dedicated system for isolating one or more valves, comprising:
electrical contacts in a power circuit configured to be coupled to one or more valve control circuits;
a plurality of remote isolation circuits remote from the one or more valves and each comprising a manually operable switch;
a relay coupled to the remote isolation circuits and configured to generate an isolation signal in response to operation of the switches; and
a control coil coupled to the relay and configured to cause opening of the contacts to isolate the one or more valves upon generation of the isolation signal.

15. The system of claim 14, wherein the system comprises electrical contacts configured to be coupled to a plurality of valves controlling flow of different fluids, or
comprising an indicator feedback circuit coupled to the control coil and including at least one sensor monitoring circuit coupled to at least one sensor, the indicator feedback circuit being configured to provide an operator-perceptible indication that at least one of the one or more valves has been isolated based upon sensor feedback monitored by the at least one sensor monitoring circuit.
